# EUROPÄISCHE PATENTSCHRIFT

(11) **EP 3 803 166 B1**
(45) Veröffentlichungstag und Bekanntmachung des Hinweises auf die Patenterteilung: **07.06.2023**
(21) Anmeldenummer: 19728016.7
(22) Anmeldetag: 29.05.2019
(51) Int. Cl.: F16J 15/38

(54) **WELLENDICHTUNGSANORDNUNG**
SHAFT SEAL ARRANGEMENT
ENSEMBLE FORMANT GARNITURE D'ÉTANCHÉITÉ D'ARBRE

(30) Priorität: 30.05.2018 DE 102018208574
(43) Veröffentlichungstag der Anmeldung: 14.04.2021
(73) Patentinhaber: KSB SE & Co. KGaA, 67227 Frankenthal (DE)
(72) Erfinder: PITTROFF, Markus, 67227 Frankenthal (DE)
(86) Internationale Anmeldenummer: PCT/EP2019/063980
(87) Internationale Veröffentlichungsnummer: WO 2019/229131

(56) Entgegenhaltungen:
- EP-A1- 1 213 516
- EP-A2- 2 447 392

## Beschreibung

Die Erfindung betrifft eine Wellendichtungsanordnung mit einer Gleitringdichtung und einer Nebendichtung, die mindestens einen O-Ring aufweist, der axial verschieblich angeordnet ist.

Solche Wellendichtungsanordnungen kommen beispielsweise bei Kreiselpumpen, an der Durchführung der rotierenden Welle aus dem Pumpengehäuse zum Einsatz.

Bei Gleitringdichtungen werden Elemente wie beispielsweise Wellenhülsen eingesetzt, um die Welle vor Verschleiß zu schützen, daher werden diese Elemente auch als Wellenschutzhülsen bezeichnet. Treten Verschleißerscheinungen auf, so muss nur die deutlich preiswertere Wellenhülse ausgetauscht werden und nicht die gesamte Welle.

Die Wellenhülse kann aus einem höherwertigeren Werkstoff gefertigt sein, der beständiger gegen Verschleiß und Korrosion ist. Dies spart Kosten gegenüber einer Ausführung der gesamten Welle aus diesem Werkstoff. Weiterhin ist es bekannt, Wellenhülsen mit einer Oxidkeramik zu beschichten.

Die gattungsgemäße Wellendichtungsanordnung umfasst eine Gleitringdichtung. Gleitringdichtungen weisen einen Dichtspalt auf, der in der Regel rechtwinklig zur Wellenachse steht. Wellendichtungen dieser Bauart werden auch als axiale oder hydrodynamische Gleitringdichtungen (GLRD) bezeichnet. Solche Gleitringdichtungen (GLRD) weisen gegenüber anderen Dichtungssystemen einen geringeren Wartungsaufwand auf. Sie bewähren sich sowohl bei niedrigen als auch bei hohen abzudichtenden Drücken bzw. Umfanggeschwindigkeiten.

Im Betrieb gleiten Dichtflächen aufeinander, die durch hydraulische und/oder mechanische Kräfte aufeinander gedrückt werden. Zwischen diesen beiden feinst bearbeiteten Gleitflächen befindet sich ein Dichtspalt mit einem meist flüssigen Schmierfilm. Die geringe Leckage gelangt bei Gleitringdichtungen (GLRD) meist beim Austritt in die Atmosphäre.

Zudem weist die Wellendichtungsanordnung eine gleitende Nebendichtung auf. Die einander gegenüberliegenden axialen oder radialen Dichtungsflächen rotieren relativ zueinander und bilden einen primären Dichtspalt. Zwischen den Dichtflächen erzeugt das umgebende Medium je nach Aggregatzustand einen flüssigen oder gasförmigen Schmierfilm. Die Abdichtung der Gleitringdichtungsteile gegenüber Welle bzw. Gehäuse erfolgt in der Regel mit Nebendichtungen.

Die Nebendichtung umfasst mindestens einen O-Ring. Aufgrund seines vorzugsweise kreisrunden Querschnitts kann der O-Ring sowohl axial als auch radial abdichten. Durch die Pressung des elastischen Körpers beim Einbau kommt eine Anfangsdichtheit zustande. Die Dichtpressung ergibt sich aus der Überlagerung der Vorpressung durch den Einbau und dem abzudichtenden Systemdruck. In der Dichtfuge herrscht daher immer eine um die Vorpressung höhere Dichtpressung als der abzudichtende Druck. Deshalb sind auch sehr hohe Drücke abdichtbar.

Bei der Anwendung von O-Ringen mit ständig bewegten Teilen kann die Lebensdauer durch eine Schmierung deutlich verlängert werden. Gelegentlich wird dem Ausgangsmaterial bereits bei der Herstellung des Dichtrings ein Schmiermittel in feinverteilter Form beigefügt, welches bei der Nutzung durch Poren in der Materialstruktur an die beanspruchte Oberfläche treten kann.

Alternativ können spezielle abriebbeständige Schichten auf die fertigen O-Ringe aufgebracht werden, welche die Schmierung für eine gewisse Zeit sicherstellen. Es kann auch bei der Montage ein Schmiermittel auf den O-Ring und auf das am Ring entlanggleitende Werkstück aufgebracht und später in angemessenen Wartungsintervallen erneuert werden. Zu diesem Zweck werden spezielle Montagefette angeboten, die sich mit den meisten verwendeten Dichtungsmaterialen vertragen.

In der DE 199 28 141 A1 wird eine Dichtungsanordnung beschrieben, bei der O-Ringe als Nebendichtungen zum Einsatz kommen. Die Anordnung umfasst eine Wellenhülse, auf der Gleitringdichtungen mit einem rotierenden Element und einem stationären Element positioniert sind, zwischen denen ein Dichtspalt für einen Schmierfilm angeordnet ist.

Die DE 202 05 419 U1 beschreibt eine Gleitringdichtungsanordnung mit einer Paarung zusammenwirkender Elemente, von denen eines drehfest an einem stationären Bauteil und das andere zur gemeinsamen Drehung an einem rotierenden Bauteil montiert ist. Eine Paarung umfasst eine Wellenhülse zur gemeinsamen Drehung mit der Welle, auf der ein erstes Element angeordnet ist. Das erste Element wirkt zusammen mit einem zweiten Element, das drehfest am Gehäuse gehalten ist.

In der DE 298 00 616 U1 wird eine Doppel-Gleitringdichtung beschrieben. Ein dynamischer Gleitring ist an einer auf einer Welle angeordneten Wellenhülse befestigt.

Die WO 95/14 185 A1 offenbart eine spezielle Gleitringdichtung zur Abdichtung einer durch ein Gehäuse hindurchtretenden Welle. An einer Wellenhülse ist ein Gegenring befestigt. Ein Gleitring ist über eine Halterung dicht mit dem Gehäuse verbindbar. Die Anordnung weist ein Federelement zum Anpressen des Gleitrings an den Gegenring auf.

In der DE 10 2014 214 929 A1 wird eine Anordnung zur Wellendichtung einer Kreiselpumpeneinheit beschrieben, die O-Ringe als Nebendichtungen und eine Wellenhülse aufweist. Die Anordnung umfasst ein Modul, das zwei Gleitring-Gegenring-Paarungen aufweist. Jeder Paarung sind Federelemente zugeordnet, die Anpresskräfte zwischen Gleitring und Gegenring erzeugen.

Die EP 1 213 516 A1 zeigt eine gattungsgemäße Gleitringdichtung für hohe Drücke mit einem stationären Gleitring und einem mit einer Welle rotierenden Gleitring.

Die EP 2 447 392 A2 beschreibt ein Gleitteil, bei dem ein aus einem elastischen Körper gebildetes Dichtungselement in Gleitkontakt mit einem harten Element steht, wobei das harte Element eine amorphe Kohlenstoffbeschichtung aufweist, die Stickstoff enthält.

Die bei Wellendichtungsanordnungen eingesetzten Nebendichtungen sollten eine leichtgängige axiale Beweglichkeit des Gleitrings zulassen. Diese Forderung wird bei herkömmlichen Wellendichtungsanordnungen nach dem Stand der Technik nur unzureichend erfüllt.

Beim Einsatz von O-Ringen als Nebendichtungen haften diese nach längerer Ruhezeit häufig stark an ihrer Gegengleitfläche. Die Haftreibungszahl der O-Ringe kann mit der Zeit erheblich ansteigen. Wenn bei einer Pumpendichtung die Welle sich nach dem Abstellen axial verschiebt, z.B. infolge thermischer Dehnung, steht allein die Federkraft zum Nachführen des Gleitrings zur Verfügung. Die übliche Federpressung der Gleitringdichtung kann in diesem Fall zu klein sein, um den O-Ring loszubrechen. Dann bleibt der O-Ring hängen ("hang-up"), der Dichtspalt klafft, und es entsteht eine starke Leckage.

Die axiale Beweglichkeit des Gleitrings wird auch behindert, wenn sich vor der Nebendichtung eine Produktschicht aufbaut oder die angrenzende Fläche durch Korrosion rauh wird. Falls mit solchen Bedingungen zu rechnen ist, sollte der Gleitring so angeordnet werden, dass die Feder den O-Ring von der rauhen Schicht weg bewegt. Gelangt die Schicht aber schließlich unter den O-Ring, muss mit Leckage gerechnet werden.

Man unterscheidet in der Praxis unentlastete und entlastete Gleitringdichtungen. Bei entlasteten Gleitringdichtungen kann die zur Entlastung notwendige Stufe durch eine Wellenhülse verwirklicht werden, auf der die O-Ring-Nebendichtung axial rutschen kann. Die Dichtung kann versagen, wenn beim Anlauf die Dichtflächen verklebt sind.

Ist der Gegenring in einem O-Ring gelagert, wird manchmal auf eine formschlüssige Verdrehsicherung verzichtet, in der Hoffnung, dass die Haftreibung des O-Rings das Reibmoment überträgt. Dies kann in manchen Fällen funktionieren. Größte Vorsicht ist jedoch geboten, wenn damit zu rechnen ist, dass klebrige Produkte in den Dichtspalt gelangen oder die Gleitdichtflächen durch Kontaktkorrosion aneinander haften. Beim Wiederanfahren wird dann der Gegenring mitgerissen, der O-Ring wird plötzlich zur Rotationsdichtung und dadurch in kurzer Zeit zerstört.

Aufgabe der Erfindung ist es, eine Anordnung zur Wellendichtung anzugeben, die eine möglichst geringe Leckage und eine lange Lebensdauer aufweist. Die Anordnung soll sich durch eine hohe Zuverlässigkeit auszeichnen. Sie soll zudem eine einfache Montage gewährleisten, sowie für Wartungsarbeiten gut zugänglich sein. Weiterhin soll sich die Anordnung durch möglichst geringe Herstellungskosten auszeichnen.

Diese Aufgabe wird erfindungsgemäß durch eine Wellendichtungsanordnung mit den Merkmalen des Anspruchs 1 gelöst. Bevorzugte Varianten sind den Unteransprüchen, der Beschreibung und den Zeichnungen zu entnehmen.

Erfindungsgemäß ist bei der Nebendichtung, die auch als Sekundärdichtung bezeichnet wird, zwischen dem axial verschieblichen O-Ring und einem Element, das eine axiale Gleitfläche für den O-Ring bildet, eine Kohlenstoffschicht angeordnet. Unter den Kohlenstoffschichten werden Schichten verstanden, in denen Kohlenstoff der überwiegende Bestandteil ist. Die Kohlenstoffschicht kann beispielsweise mit einer PVD- (engl. Physical Vapor Deposition), einer physikalischen Gasphasenabscheidung etwa durch Verdampfen oder Sputtern) oder einem CVD-(engl. Chemical Vapor Deposition; Chemische Gasphasenabscheidung) Verfahren aufgebracht werden.

Erfindungsgemäß handelt es sich dabei um eine tetraedrische wasserstofffreie amorphe Kohlenstoffschicht, die auch als ta-C Schicht bezeichnet wird.

Die dem Kristallgitter von Graphit zugehörigen Atombindungen (insgesamt jeweils 3) kennzeichnet man mit der Bezeichnung "sp2". Dabei liegt eine sp2-Hybridisierung vor.

Beim Diamant bildet jedes Kohlenstoffatom mit vier benachbarten Atomen eine tetraederförmige Anordnung. Bei dieser räumlichen Anordnung sind alle Atomabstände gleich gering. Es wirken daher sehr hohe Bindungskräfte zwischen den Atomen, und zwar in allen Raumrichtungen. Daraus resultiert die hohe Festigkeit und die extreme Härte des Diamanten. Die dem Kristallgitter von Diamant zugehörigen Atombindungen, insgesamt jeweils vier, kennzeichnet man mit der Bezeichnung "sp3". Somit liegt eine sp3-Hybridisierung vor.

Bei einer besonders günstigen Variante der Erfindung besteht die Kohlenstoffschicht aus einer Mischung von sp3- und sp2-hybridisiertem Kohlenstoff. Diese Schicht ist durch eine amorphe Struktur gekennzeichnet. In dieses Kohlenstoffnetzwerk können auch Fremdatome wie Wasserstoff, Silizium, Wolfram oder Fluor eingebaut sein.

Die erfindungsgemäße Anordnung einer Kohlenstoffschicht führt zu einer erheblich besseren axialen Beweglichkeit des O-Rings. Dadurch wird verhindert, dass die O-Ringe auch nach längerer Ruhezeit an ihrer Gegengleitfläche haften. Durch die Kohlenstoffschicht wird die Gleitfähigkeit des O-Rings so weit gesteigert, dass die übliche Federpressung der Gleitringdichtung stets ausreicht, um den O-Ring loszubrechen. Ein "hang-up" wird wirksam verhindert. Dadurch werden Leckagen vermieden und die Lebensdauer der Wellendichtungsanordnung steigt erheblich. Aufwendige Wartungsarbeiten zum Austausch der O-Ringe entfallen. Dies senkt die Betriebskosten.

Durch die Anordnung einer Kohlenstoffschicht zwischen dem O-Ring der Nebendichtung und dem Element wird eine extrem glatte axiale Oberfläche mit Antihafteigenschaften für den axial beweglichen O-Ring geschaffen, ohne dass eine aufwendige mechanische Nachbearbeitung der Bauteile erforderlich ist. Somit zeichnet sich die erfindungsgemäße Wellendichtungsanordnung durch verhältnismäßig geringe Herstellungskosten aus.

Die ta-c Schicht kann optional auch nachpoliert werden kann, um einen Ra Wert von gleich/kleiner 0,1 zu erhalten.

Die Kohlenstoffschicht gewährleistet eine geringere mechanische Belastung des dynamischen O-Ringes. Durch die erfindungsgemäße Anordnung der Kohlenstoffschicht verkrallt sich der O-Ring nicht, wie dies bei herkömmlichen bearbeiteten als Wellenhülsen ausgebildeten Elementen an den kleinen Spitzen einer geschliffenen Oberfläche der Fall ist.

Die erfindungsgemäße Anordnung einer Kohlenstoffschicht zwischen dem O-Ring und dem Element ermöglicht den Einsatz sehr hochwertiger O-Ringe aus Materialen wie beispielsweise Perfluorelastomeren. Dies war bisher bei herkömmlichen Wellendichtungen nicht ohne größeren Aufwand möglich, da die Oberfläche des Elements nicht ohne weitere Nacharbeiten ausreichend glatt war.

Durch den Einsatz solch hochwertiger O-Ringe wird eine längere Lebensdauer erreicht, was sich kostensparend auswirkt. Insbesondere beim Einsatz von aggressiven Chemikalien oder hohen Temperaturen erweisen sich hochwertige O-Ringe, beispielsweise Perfluorelastomere (FFKM/FFPM), als äußerst vorteilhaft. Dichtungen aus Perfluorelastomeren zeichnen sich durch eine exzellente Chemikalienbeständigkeit aus und verfügen gleichzeitig über die Dicht- und Rückstelleigenschaften, sowie die Kriechbeständigkeit von Elastomeren.

Die Erfindung ermöglicht auch einen Einsatz von O-Ringen aus Polytetrafluorethylen (Kurzzeichen PTFE). Dabei handelt es sich um ein unverzweigtes, linear aufgebautes, teilkristallines Polymer aus Fluor und Kohlenstoff. Umgangssprachlich wird dieser Kunststoff oft mit dem Handelsnamen "Teflon" bezeichnet. Da es sich dabei um kein Elastomer handelt, kam es beim Einsatz solcher O-Ringe in herkömmlichen Dichtungssystemen häufiger zu Leckagen am dynamischen O-Ring, da sich dieser nicht in die kleinen Unebenheiten der bisherigen Beschichtung anschmiegte. Die glattere Oberfläche aufgrund der Kohlenstoffschicht mit Antihafteigenschaften ermöglicht ein besseres Gleitverhalten und somit den Einsatz von PTFE O-Ringen. Dies bringt auch Vorteile aufgrund des großen preislichen Vorteil der PTFE O-Ringe gegenüber FFKM/FFPM mit sich.

Bei dem Element, das eine axiale Gleitfläche für den axial verschieblichen O-Ring bildet, handelt es sich erfindungsgemäß um eine Wellenhülse. Ergänzend oder alternativ kann das Element als Gleitringdichtungsträger und/oder als Dichtungdeckel ausgebildet sein.

Bei einer besonders günstigen Variante der Erfindung wird die Kohlenstoffschicht als Beschichtung auf das Element aufgebracht. Die Dicke der Schicht beträgt vorteilhaft mehr als 0,3 µm, vorzugsweise mehr als 0,6 µm, insbesondere mehr als 0,9 µm. Weiterhin erweist es sich als günstig, wenn die Beschichtung weniger beträgt als 30 µm, vorzugsweise weniger als 25 µm, insbesondere weniger als 20 µm beträgt.

Bei einer Variante der Erfindung wird das Element, erfindungsgemäß eine normale standardmäßige Wellenhülse (Serienteil), mittels einer einfachen Maskierungsvorrichtung, die im Wesentlichen aus zwei rohrförmigen Teilen besteht, abgedeckt, um nur den gewünschten Beschichtungsbereich frei zu lassen. Dabei können mehrere Elemente gleichzeitig in den Beschichtungsreaktor (Vakuumkammer) eingebracht werden, wo mit mäßiger thermischer Belastung, eine ta-C Beschichtung aufgebracht wird.

Das Element ist nach dem Beschichtungsvorgang sofort ohne jegliche Nacharbeit einsatzbereit. Die ta-C-Beschichtung weist einen sehr geringen Reibbeiwert bei gleichzeitig sehr guter chemischer Beständigkeit auf. Die Härte der Beschichtung kommt der Härte von Diamant sehr nahe, wobei die Härte vorzugsweise mehr als 20 GPa, vorzugsweise mehr als 30 GPa, insbesondere mehr als 40 GPa beträgt, aber weniger als 120 GPa, vorzugsweise weniger als 110 GPa, insbesondere weniger als 100 GPa. Vorzugsweise wird die Kohlenstoffschicht nicht unmittelbar auf das Element aufgebracht, sondern es wird zunächst eine Haftvermittlerschicht auf das Element vorgesehen. Diese besteht vorzugsweise aus einem Werkstoff, der sowohl gut an Stahl haftet als auch eine Kohlenstoffdiffusion verhindert, z. B. durch die Bildung stabiler Carbide. Als Haftvermittlungsschichten, die diese Anforderungen erfüllen, kommen vorzugsweise dünne Schichten aus Chrom, Titan oder Silizium zum Einsatz. Insbesondere haben sich Chrom und Wolframcarbid als Haftvermittler bewährt.

Bei einer vorteilhaften Variante der Erfindung weist die Beschichtung eine Haftvermittlerschicht auf, die vorzugsweise einen Chromwerkstoff beinhaltet. Vorzugsweise besteht die Haftvermittlerschicht zu mehr als 30 Gew.-%, vorzugsweise mehr als 60 Gew.-%, insbesondere mehr als 90 Gew.-% aus Chrom.

Dabei erweist es sich als vorteilhaft, wenn die Dicke der Haftvermittlerschicht mehr als 0,03 µm, vorzugsweise mehr als 0,06 µm, insbesondere mehr als 0,09 µm beträgt und/oder weniger als 0,21 µm, vorzugsweise weniger als 0,18 µm, insbesondere weniger als 0,15 µm beträgt.

Im Gegensatz zu den aufwändigen herkömmlichen Beschichtungen von Elementen, die beispielsweise als Wellenschutzhülsen ausgebildet sind, mittels thermisch aufgebrachten Oxidkeramiken, erweist sich die erfindungsgemäße Beschichtungstechnik als äußerst vorteilhaft. Bei herkömmlichen Beschichtungsverfahren von Elementen ist ein thermisches Spritzen erforderlich. Dazu wird eine wannenartige Ausdrehung in dem Bereich benötigt, wo die Beschichtung aufgebracht werden soll. Anschließend ist eine Bearbeitung durch Fertigdrehen sämtlicher Maße und Rundschleifen mit anschließendem Läppen des Außendurchmessers notwendig, um das gewünschte Maß und die Oberflächengüte zu erhalten.

Im Stand der Technik ist auch die Stellitpanzerung als Beschichtungsmethode von Elementen, insbesondere von Wellenhülsen, oder galvanisches Hartverchromen bekannt.

Die Stellitpanzerung und die Hartverchromung sind jedoch wesentlich weicher als eine thermisch aufgebrachte Oxidkeramikbeschichtung oder eine ta-C-Beschichtung.

Somit handelt es sich bei der erfindungsgemäßen ta-C Beschichtung um ein einfacheres, schnelleres und wirtschaftlicheres Verfahren. Die erfindungsgemäße Beschichtung weist neben einer sehr großen Härte auch hervorragende Gleiteigenschaften und eine gute chemische Beständigkeit auf. Dies bedeutet ideale Bedingungen für den dynamischen O-Ring diverser Gleitringdichtungsbaureihen.

Grundsätzlich kann die Erfindung bei einer herkömmlichen Einzelgleitringdichtung angewendet werden als auch bei Patronengleitringdichtungen.

Zudem ermöglicht die Erfindung auch eine Beschichtung von dünnwandigen Elementen mit kleineren Durchmessern, was bisher mit herkömmlichen Oxidkeramikbeschichtungen nur sehr schwer realisierbar war.

Der Vorteil der höheren Härte durch die ta-C Beschichtung liegt zum einen darin begründet, dass sich kleine Feststoffpartikel, die oft in den Medien enthalten sind, in dem Bereich am O-Ring ansammeln, an der er das Element berührt. Durch die Axialbewegung wirken diese Feststoffteilchen wie ein Schleifmittel und arbeiten sich so in die Oberfläche des Elements ein. Dies führt dazu, dass auf der Oberfläche von herkömmlichen als Wellenhülsen ausgebildeten Elementen und des O-Rings kleine Längsriefen entstehen, die frühzeitig zum Verschleiß beider Teile und einer Leckage führen.

Vorzugsweise werden zur Beschichtung PECVD/PACVD-Verfahren eingesetzt. Dabei erfolgt eine Plasmaanregung der Gasphase durch die Einkopplung von gepulster Gleichspannung ("pulsed dC"), mittelfrequenter (KHz-Bereich) oder hochfrequenter (MHz-Bereich) Leistung. Aus Gründen einer maximierten Prozessvariabilität bei unterschiedlichen Werkstückgeometrien und Beladungsdichten hat sich zudem die Einkopplung von gepulster Gleichspannung bewährt.

Diese Technologie führt zu Schichten, in die je nach Bedarf auch Fremdatome eingebaut sein können. Die Abscheidetemperaturen liegen typisch deutlich unter 1500 °C. Gefüge- und Dimensionsänderungen der zu beschichtenden Werkstoffe (metallisch, hoch- und niedrig legierte Edelstähle, ...) sind ausgeschlossen.

Weitere Vorteile und Merkmale der Erfindung ergeben sich aus der Beschreibung eines Anführungsbeispiels anhand einer Zeichnung und aus der Zeichnung selbst.

Dabei zeigt
- Figur 1: Schnittdarstellung eines Ausschnitts einer Kreiselpumpe,
- Figur 2: eine vergrößerte Schnittdarstellung Anordnung zur Wellendichtung.

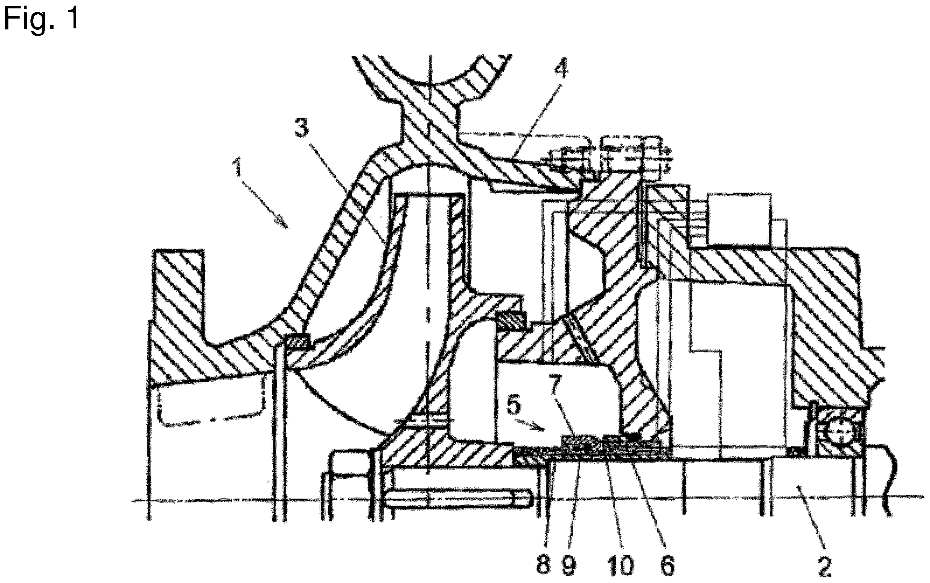

Figur 1 zeigt eine Kreiselpumpe 1 mit einer rotierenden Welle 2, einem Laufrad 3 und einem feststehenden Gehäuse 4. Eine als Gleitringdichtung ausgeführte Anordnung zur Wellendichtung 5 umfasst einen Gegenring 6 und einen axial beweglichen Gleitring 7. Der axial bewegliche Gleitring 7 wird mittels eines Vorspannelements 8, hier eine Druckfeder, und über einen Stützscheibe 9 in Richtung auf den Gegenring 6 gedrückt, sodass einander gegenüberliegende Flächen des Gegenrings 6 und des Gleitrings 7 abdichtend zusammenwirken und zwischen sich einen Dichtspalt 10 ausbilden.

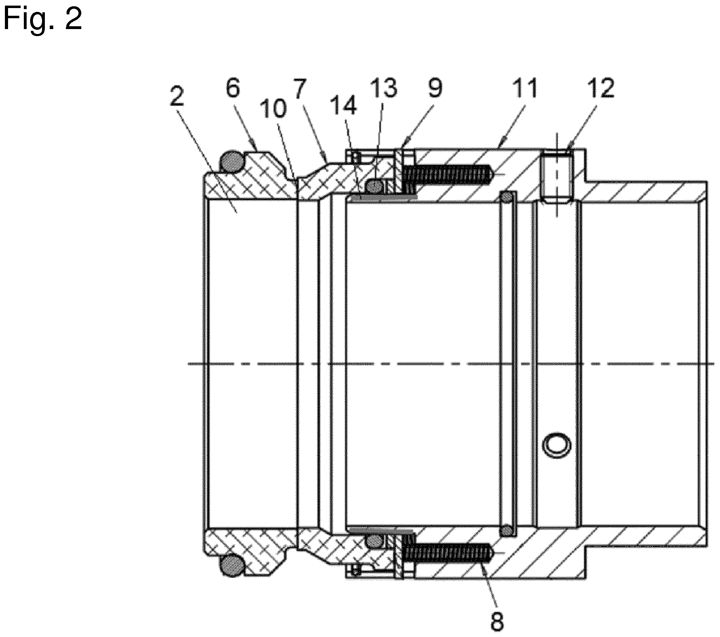

Figur 2 zeigt eine vergrößerte Darstellung einer Anordnung zur Wellendichtung 5. Das Vorspannelement 8 übt eine Anpresskraft auf den axial verschieblichen Gleitring 7 aus. Auf der Welle 2 ist ein als Wellenhülse ausgebildetes Element 11 angeordnet, die über einen Gewindestift 12 fixiert ist.

Die Darstellung gemäß Figur 2 zeigt mehrere O-Ringe, von den ausschließlich der O-Ring 13 axial verschieblich angeordnet ist.

Erfindungsgemäß ist zwischen dem axial verschieblichen O-Ring 13 und dem als Wellenhülse ausgeführten Element 11 eine Kohlenstoffschicht 14 angeordnet. Diese wird als amorphe Kohlenstoffschicht, erfindungsgemäß als ta-C Beschichtung, des Elements 11 in das Dichtungssystem eingebracht. Die Dicke der Beschichtung liegt vorzugsweise im Bereich zwischen 1 und 20 µm, wobei die Beschichtung eine chromhaltige 0,1 µm dicke Haftvermittlerschicht zwischen dem Element11 und der Kohlenstoffschicht 14 aufweist.

Die erfindungsgemäße Beschichtung mit der Kohlenstoffschicht 14 verbessert die axiale Beweglichkeit des O-Rings 13. Dadurch wird verhindert, dass der O-Ring 13 auch nach längerer Ruhezeit an einer Fläche haftet. Durch die Kohlenstoffschicht 14 wird die Gleitfähigkeit des O-Rings 13 so weit gesteigert, dass die übliche Federpressung ausreicht um den O-Ring 13 loszubrechen. Dadurch wird ein "hang-up" verhindert.

## Patentansprüche

1. Wellendichtungsanordnung mit einer Gleitringdichtung und einer Nebendichtung, die mindestens einen O-Ring (13) aufweist, der axial verschieblich angeordnet ist,
**dadurch gekennzeichnet, dass**
zwischen dem axial verschieblichen O-Ring (13) und einem Element (11), das eine axiale Gleitfläche für den O-Ring (13) bildet, eine Kohlenstoffschicht (14) zur Steigerung der Beweglichkeit des O-Rings (13) angeordnet ist, wobei es sich um eine tetraedrische wasserstofffreie amorphe Kohlenstoffschicht handelt, wobei das Element (11) als Wellenhülse ausgebildet ist.

2. Wellendichtungsanordnung nach Anspruch 1, **dadurch gekennzeichnet, dass** die Kohlenstoffschicht (14) als Beschichtung auf dem Element (11) aufgebracht ist.

3. Wellendichtungsanordnung nach Anspruch 2, **dadurch gekennzeichnet, dass** die Beschichtung eine Haftvermittlerschicht aufweist.

4. Wellendichtungsanordnung nach Anspruch 3, **dadurch gekennzeichnet, dass** die Haftvermittlerschicht zu mehr als 30 Gew.-%, vorzugsweise mehr als 60 Gew.-%, insbesondere mehr als 90 Gew.-% aus Chrom besteht.

5. Wellendichtungsanordnung nach Anspruch 3 oder 4, **dadurch gekennzeichnet, dass** die Dicke der Haftvermittlerschicht mehr als 0,03 µm, vorzugsweise mehr als 0,06 µm, insbesondere mehr als 0,09 µm beträgt und/oder weniger als 0,21 µm, vorzugsweise weniger als 0,18 µm, insbesondere weniger als 0,15 µm beträgt.

6. Wellendichtungsanordnung nach einem der Ansprüche 1 bis 5, **dadurch gekennzeichnet, dass** die Härte des Elements (11) mit der Kohlenstoffschicht (14) mehr als 20 GPa, vorzugsweise mehr als 30 GPa, insbesondere mehr als 40 GPa beträgt und/oder weniger als 120 GPa, vorzugsweise weniger als 110 GPa, insbesondere weniger als 100 GPa beträgt.

7. Wellendichtungsanordnung nach einem der Ansprüche 1 bis 6, **dadurch gekennzeichnet, dass** die Dicke der Kohlenstoffschicht (14) mehr als 0,3 µm, vorzugsweise mehr als 0,6 µm, insbesondere mehr als 0,9 µm beträgt und/oder weniger als 30 µm, vorzugsweise weniger als 25 µm, insbesondere weniger als 20 µm beträgt.

## Claims

1. Shaft seal arrangement having a mechanical seal and a secondary seal which has at least one O-ring (13) which is arranged so as to be axially displaceable,
**characterized in that**
between the axially displaceable O-ring (13) and an element (11) which forms an axial sliding surface for the O-ring (13), a carbon layer (14) for increasing the movability of the O-ring (13) is arranged, wherein the carbon layer is a tetrahedral hydrogen-free amorphous carbon layer, wherein the element (11) is in the form of a shaft sleeve.

2. Shaft seal arrangement according to Claim 1, **characterized in that** the carbon layer (14) has been applied as a coating to the element (11).

3. Shaft seal arrangement according to Claim 2, **characterized in that** the coating has an adhesion promoter layer.

4. Shaft seal arrangement according to Claim 3, **characterized in that** the adhesion promoter layer consists of more than 30% by weight, preferably more than 60% by weight, in particular more than 90% by weight chromium.

5. Shaft seal arrangement according to Claim 3 or 4, **characterized in that** the thickness of the adhesion promoter layer is more than 0.03 um, preferably more than 0.06 um, in particular more than 0.09 um and/or is less than 0.21 um, preferably less than 0.18 um, in particular less than 0.15 um.

6. Shaft seal arrangement according to any of Claims 1 to 5, **characterized in that** the hardness of the element (11) having the carbon layer (14) is more than 20 GPa, preferably more than 30 GPa, in particular more than 40 GPa and/or is less than 120 GPa, preferably less than 110 GPa, in particular less than 100 GPa.

7. Shaft seal arrangement according to any of Claims 1 to 6, **characterized in that** the thickness of the carbon layer (14) is more than 0.3 um, preferably more than 0.6 um, in particular more than 0.9 um and/or is less than 30 µm, preferably less than 25 µm, in particular less than 20 um.

## Revendications

1. Agencement d'étanchéité d'arbre comprenant une garniture d'étanchéité à bague glissante et une garniture d'étanchéité secondaire, qui présente au moins un joint torique (13) qui est agencé de manière axialement mobile,
**caractérisé en ce que**
une couche de carbone (14) est agencée entre le joint torique (13) axialement mobile et un élément (11) formant une surface de glissement axiale pour le joint torique (13) afin d'augmenter la mobilité du joint torique (13), celle-ci consistant en une couche de carbone amorphe tétraédrique exempte d'hydrogène, l'élément (11) étant configuré sous forme de chemise d'arbre.

2. Agencement d'étanchéité d'arbre selon la revendication 1, **caractérisé en ce que** la couche de carbone (14) est appliquée sur l'élément (11) sous forme de revêtement.

3. Agencement d'étanchéité d'arbre selon la revendication 2, **caractérisé en ce que** le revêtement présente une couche de promoteur d'adhésion.

4. Agencement d'étanchéité d'arbre selon la revendication 3, **caractérisé en ce que** la couche de promoteur d'adhésion est constituée de plus de 30 % en poids, de préférence de plus de 60 % en poids, notamment de plus de 90 % en poids de chrome.

5. Agencement d'étanchéité d'arbre selon la revendication 3 ou 4, **caractérisé en ce que** l'épaisseur de la couche de promoteur d'adhésion est supérieure à 0,03 µm, de préférence supérieure à 0,06 µm, notamment supérieure à 0,09 µm et/ou inférieure à 0,21 µm, de préférence inférieure à 0,18 µm, notamment inférieure à 0,15 µm.

6. Agencement d'étanchéité d'arbre selon l'une quelconque des revendications 1 à 5, **caractérisé en ce que** la dureté de l'élément (11) avec la couche de carbone (14) est supérieure à 20 GPa, de préférence supérieure à 30 GPa, notamment supérieure à 40 GPa et/ou inférieure à 120 GPa, de préférence inférieure à 110 GPa, notamment inférieure à 100 GPa.

7. Agencement d'étanchéité d'arbre selon l'une quelconque des revendications 1 à 6, **caractérisé en ce que** l'épaisseur de la couche de carbone (14) est supérieure à 0,3 µm, de préférence supérieure à 0,6 µm, notamment supérieure à 0,9 µm et/ou inférieure à 30 µm, de préférence inférieure à 25 µm, notamment inférieure à 20 µm.
